# EUROPÄISCHE PATENTSCHRIFT

(11) **EP 0 717 948 B1**
(45) Veröffentlichungstag und Bekanntmachung des Hinweises auf die Patenterteilung: **30.07.1997**
(21) Anmeldenummer: 95117811.0
(22) Anmeldetag: 10.11.1995
(51) Int. Cl.: A47J 31/06, A47J 31/44

(54) **Espresso-Dauerfiltereinsatz**
Reusable filter insert for espresso coffee
Filtre réutilisable pour café express

(30) Priorität: 20.12.1994 DE 9420340 U
(43) Veröffentlichungstag der Anmeldung: 26.06.1996
(73) Patentinhaber: MAXS AG, CH-6072 Sachseln (CH)
(72) Erfinder: Strub, Jürg, CH-6315 Oberägeri (CH); Gasser, Ruedy, CH-6077 Bürglen (CH)
(74) Vertreter: Grünecker, Kinkeldey, Stockmair & Schwanhäusser Anwaltssozietät

(56) Entgegenhaltungen:
- EP-A- 0 020 093
- BE-A- 563 477
- CH-A- 349 388
- DE-A- 4 129 814
- FR-A- 1 013 020
- US-A- 4 052 318
- US-A- 5 028 328

## Beschreibung

Die vorliegende Erfindung bezieht sich auf einen Espresso-Dauerfiltereinsatz zum Einsatz in einer Espressomaschine mit einer im wesentlichen ebenen Filterscheibe, die von mehreren Filteröffnungen im wesentlichen in Strömungsrichtung des zu filternden Mediums durchbrochen ist.

Derartige Dauerfiltereinsätze sind bei Espressomaschinen allgemein bekannt (z.B. DE 34 00 567). Häufig wird ein durch Tiefziehen hergestelltes Metalltöpfchen als Dauerfiltereinsatz verwendet, dessen Bodenplatte zur Herstellung der Filteröffnungen vielfach perforiert ist. Im allgemeinen ist man bei Espressomaschinen bestrebt, die Qualität des herzustellenden Espressos, soweit diese von dem Herstellungsverfahren und der verwendeten Maschine abhängt, zu verbessern. Eine der Kriterien, die hierbei eine große Rolle spielen, ist die Cremabildung auf dem Espresso, welche im wesentlichen von der verwendeten Vorrichtung anhängt. In der Technik wurden hierzu bereits zahlreiche Versuche unternommen. In der letzten Zeit bestehen jedoch weiterführende Vorgaben, die darauf abzielen, eine Qualitätsverbesserung des Espressos auch dann zu erreichen, wenn Espressomaschinen eingesetzt werden, die mit niedrigen Drücken arbeiten.

Des weiteren ist aus der US-A-4 052 318 eine Filtervorrichtung zum drucklosen Herstellen von Filterkaffee bekannt. Bei dieser Vorrichtung sind zwei topfförmige Siebfilter im parallelen Abstand zueinander gehalten, die in eine Kaffeemaschine eingesetzt werden.

Es ist daher die Aufgabe der vorliegenden Erfindung, einen Espresso-Dauerfiltereinsatz der eingangs genannten Art bereitzustellen, der eine Verbesserung der Cremabildung auch bei Espressomaschinen mit niedrigeren Arbeitsdrücken bereitstellt.

Diese Aufgabe wird erfindungsgemäß dadurch gelöst, daß nachfolgend der Filterscheibe im Strömungsrichtung eine Verwirbelungskanten bereitstellende Lochblendenscheibe im Abstand zur Filterscheibe angeordnet ist, wodurch das zu filternde Medium verstärkt verwirbelt bzw. umgelenkt wird. Durch die Anordnung einer Lochblendenscheibe wird dem zu filternden Medium ein weiteres Hindernis in seinen Fließweg gestellt, an dem sich vielfach Verwirbelungen bilden können, die zur Ausbildung einer feinen Crema beitragen. Wichtig ist hierbei, daß sich das bereits durch die Filterscheibe vorverwirbelte und umgelenkte Medium an weiteren Kanten, die durch die Lochblendenscheibe bereitgestellt werden, verwirbeln kann. Dabei kann die Lochblendenscheibe einige wenige Löcher aufweisen oder aber vorzugsweise auch identisch zur Filterscheibe sein.

Bei einer ersten Ausgestaltung, bei der die Scheiben unmittelbar aneinanderliegen, können zur besseren Verwirbelung und Umlenkung des zu filternden Mediums die Filteröffnungen der beiden Scheiben zueinander versetzt angeordnet sein. Zusätzlich oder ausschließlich können sich auch zumindest die Filteröffnungen der Lochblenden diffusorförmig erweitern. Hierdurch findet eine Vernebelung des zu filternden Mediums statt, wodurch eine noch feinere Crema gebildet wird. Der Begriff "diffusorförmig" ist nicht zu eng auszulegen; es genügt hierbei, wenn sich die Filteröffnungen in Strömungsrichtung erweitern, ohne daß die Seitenwände extra strömungsgünstig gekrümmt ausgeführt sind.

Damit sich das Medium nach der ersten Filterscheibe schon besonders gut vorverwirbeln kann, sind in einer weiteren Ausführungsform die beiden Scheiben im Abstand von 0,05 mm bis 4,0 mm voneinander angeordnet.

Als vorteilhaft hat sich auch herausgestellt, wenn die Filteröffnungen in zumindestens einer der Scheiben einen polygonförmigen Querschnitt aufweisen, durch diese Ausgestaltungsvariante der Filteröffnungen ist sichergestellt, daß die Strömungsgeschwindigkeit des Mediums über den Querschnitt einer Filteröffnung variiert. Die Maßnahme sorgt für eine weiterhin verbesserte Verwirbelung und somit zur Ausbildung einer feinschaumigeren Crema.

Da als Filterscheiben meistens relativ dünne, galvanisch hergestellte Folien verwendet werden, kann es von Vorteil sein, die Lochblendenscheibe zum Abstützen der Filterscheibe auf ihrer Oberseite mit Stegen, bzw. Noppen zu versehen. Hierdurch ist sichergestellt, daß die Filterscheibe immer in einem bestimmten Abstand zur Lochblendenscheibe angeordnet ist.

Eine besonders preiswerte Variante eines Espressodauerfiltereinsatzes gemäß der vorliegenden Erfindung wird dadurch erreicht, daß die Filterscheibe in einen Metalltopf eingesetzt ist, dessen Bodenplatte als stützende Lochblendenscheibe ausgebildet ist.

Bei einer weiteren Variante kann die Lochblendenscheibe in Kunststoff ausgeführt werden, welche bereits mit Stegen bzw. Noppen auf der Oberseite zur Stützung der galvanisch hergestellten Filterscheibe versehen ist.

Von Vorteil ist es auch, wenn die Scheiben in einem Kunststoffrahmen gehaltert sind, der angespritzt ist. Die Scheiben werden hierdurch eindeutig in ihrer Lage fixiert und sicher gehalten, wobei die eventuell scharfkantigen Randbereiche abgedeckt sind.

Bei einer Variante kann in den äußeren Umfangsbereich des Rahmens ein umlaufender Kragen einer Metalltopfwandung eingreifen und somit einen Kaffeeaufnahmebereich im Innern der Wandung bilden. Der umlaufende Kragen kann dabei so ausgebildet sein, daß zumindestens eine der Scheiben mit ihrem Randbereich auf diesem abstützend aufliegt.

Eine relativ kostengünstige Ausgestaltung besteht darin, daß der Rahmen aus Kunststoff hergestellt ist und gleichzeitig als Topfwandung zum Bilden eines Kaffeeaufnahmebereichs ausgestaltet ist. Die Scheiben bilden dann den Boden des Topfes.

Eine weitere Ausführungsform bezieht sich auf einen Espresso-Dauerfiltereinsatz, dessen Rahmen aus Kunststoff besteht und einen nach oben und außen weisenden, umlaufenden Kragen aus Metall aufweist, der sich zumindest im oberen Rand als rohrförmiger, den oberen Bereich der Topfwandung bildenden Metallring fortsetzt. Diese Ausgestaltung verleiht dem Topf eine sehr hohe Stabilität im oberen Randbereich und läßt sich durch das stirnseitige Verbinden mit der Kunststoffwandung sehr leicht spritzgußtechnisch in einem Arbeitsgang mit dem Einspritzen von Filterscheibe und Lochscheibe durchführen.

Im folgenden wird die vorliegende Erfindung anhand einer Zeichnung mit verschiedenen Ausführungsbeispielen näher erläutert. Es zeigt:
- Figur 1: eine erste Ausführungsform eines erfindungsgemäßen Dauerfiltereinsatzes im Halbschnitt,
- Figur 2: den Filterscheibenbereich des Dauerfiltereinsatzes gemäß Figur 1 in vergrößerter Darstellung,
- Figur 3: eine zweite Ausführungsform eines erfindungsgemäßen Dauerfiltereinsatzes im Halbschnitt,
- Figur 4: den Filterscheibenbereich des Dauerfiltereinsatzes aus Figur 3 in vergrößerter Darstellung,
- Figur 5: eine dritte Ausführungsform der vorliegenden Erfindung in einer vergrößerter Teilansicht,
- Figur 6: eine vierte Ausführungsform der vorliegenden Erfindung in einer vergrößerten Teilansicht,
- Figur 7: eine fünfte Ausführungsform der vorliegenden Erfindung in einer vergrößerten Teilansicht,
- Fig. 8: eine Verbindungsvariante eines Metallrings mit einer Kunststoffwandung in einer vergrößerten Teilansicht,
- Fig. 9: einen Metalltopf für eine sechste Ausführungsform der vorliegenden Erfindung,
- Fig. 10: eine Bodenplattenvariante des Metalltopfes aus Figur 9 in einer Draufsicht,
- Fig. 11: eine weitere Bodenplattenvariante des Metalltopfes aus Figur 9 in einer Draufsicht,
- Fig. 12: einen Metalltopf für eine siebte Ausführungsform der vorliegenden Erfindung,
- Fig. 13: den Metalltopf aus Figur 12 in einer Draufsicht.

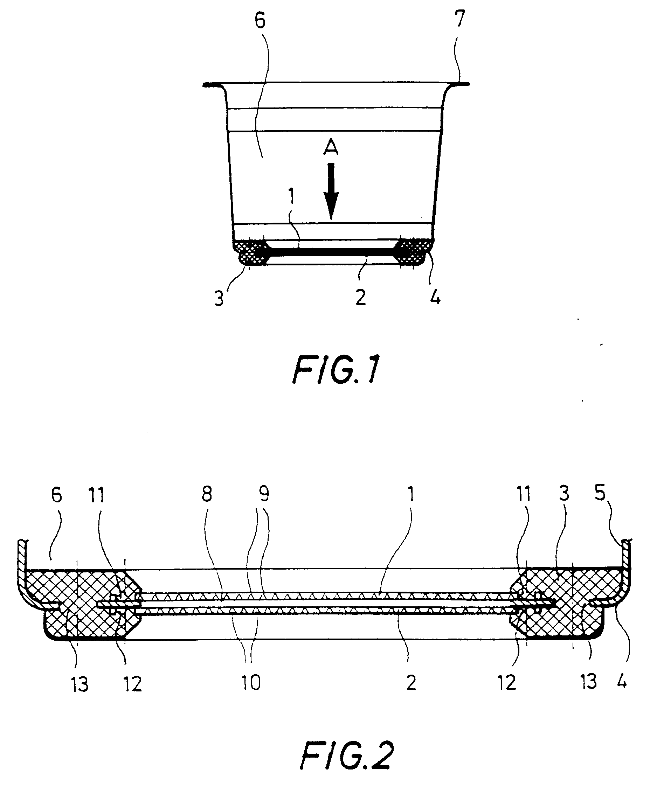

Im folgenden wird anhand der Figuren 1 und 2 eine erste Ausführungsform der vorliegenden Erfindung näher beschrieben.

Der erfindungsgemäße Espresso-Dauerfiltereinsatz besteht im wesentlichen aus einer, in Strömungsrichtung A gesehen, oben liegenden Filterscheibe 1, einer, im wesentlichen parallel darunter angeordneten Lochblendenscheibe 2, einem die Scheiben 1, 2 umgebenden Kunststoffrahmen 3 und einer mit einem radial nach innen gerichteten Kragen 4 versehenen Metallwandung 5. Die Metallwandung 5 erstreckt sich quer zu den Scheiben 1, 2 zur Bildung eines Kaffeeaufnahmebereichs 6 eines topfförmigen Dauerfiltereinsatzes nach oben. Die Metallwandung 5 weist an ihrem oberen Ende einen umlaufenden Auflageflansch 7 auf.

Die Scheiben 1, 2 sind im parallelen Abstand zueinander angeordnet, so daß ein im wesentlichen scheibenförmiger Zwischenraum 8 gebildet wird. Des weiteren ist zu erkennen, daß sich in den Scheiben 1, 2 zahlreiche Filteröffnungen 9, 10 befinden, die sich in Strömungsrichtung A durch die Scheiben 1, 2 erstrecken. Die Filteröffnungen 9, 10 sind diffusorförmig ausgebildet. Das bedeutet, daß diese sich in Strömungsrichtung A gesehen, im Querschnitt erweitern. Darüberhinaus sind die Filteröffnungen 9 der Filterscheibe 1 gegenüber den Filteröffnungen 10 der Lochblendenscheibe 2 zueinander versetzt angeordnet.

Die Scheiben 1, 2 weisen jeweils an ihrem äußeren Randbereich über den Umfang verteilt, mehrere Durchbrüche 11, 12 auf, in die entsprechend Kunststoffmaterial des Kunststoffrahmens 3 zur Verankerung der Scheiben 1, 2 beim Spritzgußvorgang eingedrungen ist.

Zu diesem Zwecke weist der umlaufende Kragen 4 der Metallwandung 5 Aussparungen 13 auf, in die ebenfalls Kunststoffmaterial des Kunststoffrahmens 3 während eines Spritzgußvorganges eingedrungen ist. Des weiteren ist zu erkennen, daß der Kragen 4 auch zur direkten Auflage der Scheiben 1 und 2 dient, so daß die Breite des Zwischenraums 8 von diesem abhängt.

Im folgenden wird die Wirkungs-/Funktionsweise der obigen Ausführungsform näher erläutert.

Der in den Figuren 1 und 2 dargestellte Espresso-Dauerfiltereinsatz wird in die entsprechende Stelle an einer Espressomaschine eingesetzt und der Kaffeeaufnahmebereich 6 mit einer entsprechenden Menge Espressopulver gefüllt. Anschließend wird Wasser verdampft und durch das im Kaffeeaufnahmebereich 6 sich befindliche Pulver in Strömungsrichtung A gedrückt. Da der erfindungsgemäße Espresso-Dauerfiltereinsatz auch für große Maschinen mit niedrigeren Arbeitsdrücken Verwendung finden soll, geschieht dies bevorzugt bei Drücken von 6-8 bar. Das zu filternde Medium erreicht die Filterscheibe 1 und strömt durch die Filteröffnungen 9 in Strömungsrichtung A nach unten. Durch die Diffusorform der Filteröffnungen 9 wird das zu filternde Medium verwirbelt bzw. vernebelt und dringt in diesem Zustand in den Zwischenraum 8 ein. Zur Verbesserung der Verwirbelung können die Filteröffnungen 9 auch einen Polygonquerschnitt aufweisen. Vom Zwischenraum 8 strömt das vorverwirbelte Medium in die Filteröffnung 10 der Lochblendenscheibe 2. Hier findet nun eine weitere Verwirbelung statt, die selbst bei den niedrigeren Drücken dafür sorgt, daß sich eine feine Crema auf dem darunter in einem Aufnahmegefäß aufzufangenden Espresso bildet.

Im folgenden werden weitere Ausführungsformen der vorliegenden Erfindung anhand verschiedener Figuren näher erläutert. Für gleiche und ähnliche Bauteile werden gleiche Bezugsziffern verwendet. Es soll im folgenden nur auf die wesentlichen Änderungen eingegangen werden.

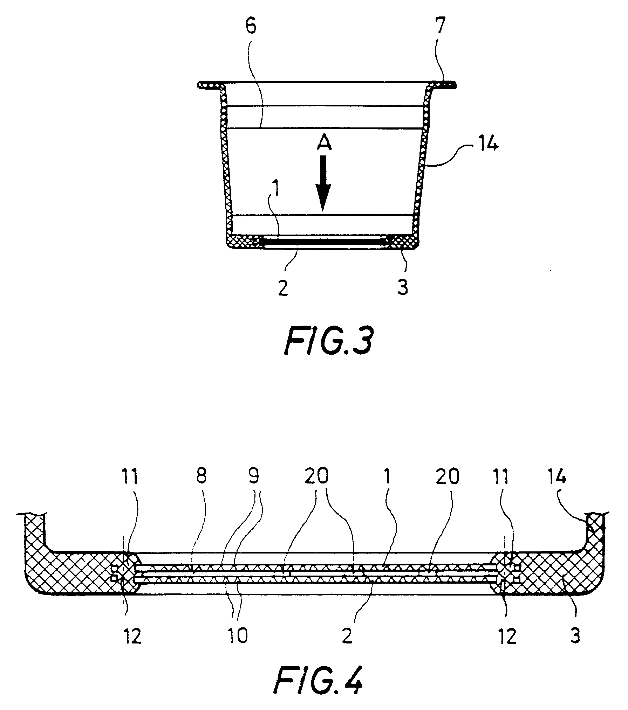

Anhand der Figuren 3 und 4 wird eine zweite Ausführungsform erläutert. Der Kunststoffrahmen 3, in den die Randbereiche der Scheiben 1, 2 eingebettet sind, ist bei dieser Ausführungsform einteilig mit der Wandung 14, die somit ebenfalls aus Kunststoff besteht, hergestellt. Diese Ausgestaltung hat den Vorteil, daß durch einen einzigen Spritzgußvorgang sowohl der Rahmen 3 als auch die Wandung 14 mit daran angeordnetem Auflageflansch 7 kostengünstig hergestellt werden kann. Die Lochblendenscheibe 2 weist auf ihrer Oberseite mehrere Stege oder Noppen 20 auf, die die Filterscheibe 1 im Abstand zur Lochblendenscheibe 2 abstützen.

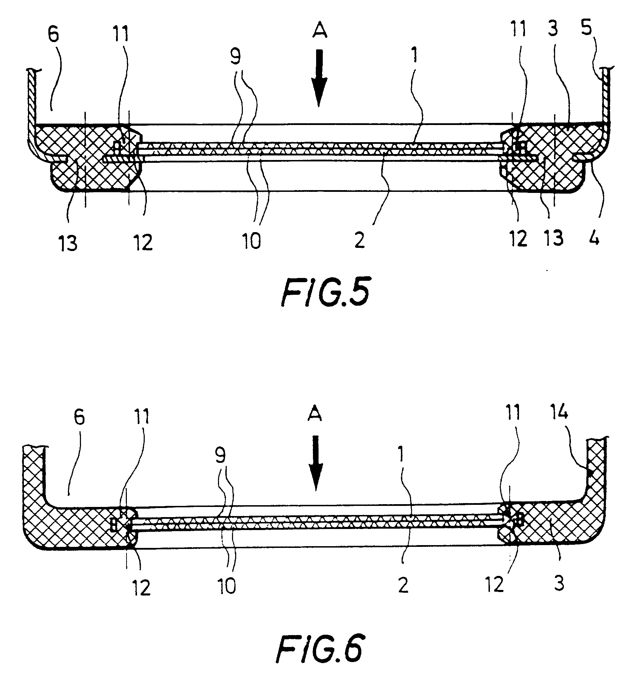

Bei der Ausführungsform nach Figur 5 besteht der Unterschied darin, daß beide Scheiben 1, 2 direkt übereinander, gegebenfalls mit einem sehr geringen Abstand zueinander angeordnet sind. Dies hat insbesondere fertigungstechnische Vorteile. Die Ausführungsform nach Figur 6 zeigt eine solche Anordnung der Scheiben 1, 2 unmittelbar aufeinander zusammen mit einem Kunststoffrahmen 3 und daran einteilig angeordneter Kunststoffwandung 14.

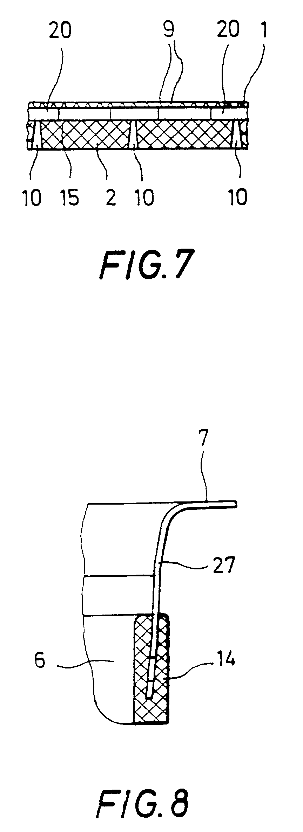

In der fünften Ausführungsform gemäß Figur 7 ist unterhalb der Filterscheibe 1 eine Lochblendenscheibe 15 aus Kunststoff angeordnet, die auf ihrer Oberseite mehrere Kunststoffstege oder Noppen 20 aufweist, die die erste Filterscheibe 1 im Abstand zur Verteilerscheibe 15 abstützen. Die Lochblendenscheibe 15 kann auf dem Kunststoffrahmen 3 mittels eines Absatzes 21 an dieser aufsitzen. An dieser Stelle sei erwähnt, daß die Stege oder Noppen 20 auch so angeordnet sein können, daß ein verlängerter Strömungskanal für das zu filternde Medium entsteht, so daß dieses nicht direkt radial zu den Filteröffnungen 10 geleitet wird. Die Filteröffnungen 10 sind bei dieser Variante sehr klein gehalten und ebenfalls diffusorförmig ausgebildet, damit nochmals ein Verwirbelungseffekt auftritt.

Für die in Figur 8 dargestellt Ausführungsform wird gesondert Schutz begehrt. Hierbei ist die Wandung 14 an dem Kunststoffrahmen 3 nur bis zu einer bestimmten Höhe hochgezogen und in diese wird stirnseitig ein rohrförmiger Metallring 27 eingesetzt, der sich mittels eines Spritzgußvorgangs mit der Wandung 14 verbinden läßt. Der Metallring 27 kann an seinem unteren Endbereich Durchbrüche aufweisen, in die Kunststoffmaterial eindringt. Durch diese Ausführungsform wird eine Verstärkung des oberen Randbereichs des topfförmigen Dauerfiltereinsatzes erreicht, ohne daß eine besondere Bearbeitung des unteren Endabschnittes des rohrförmigen Metallrings 27 erforderlich wäre. Hierdurch können kostenintensive Verfahrensschritte, wie Tiefziehen eines unteren Kragens entfallen.

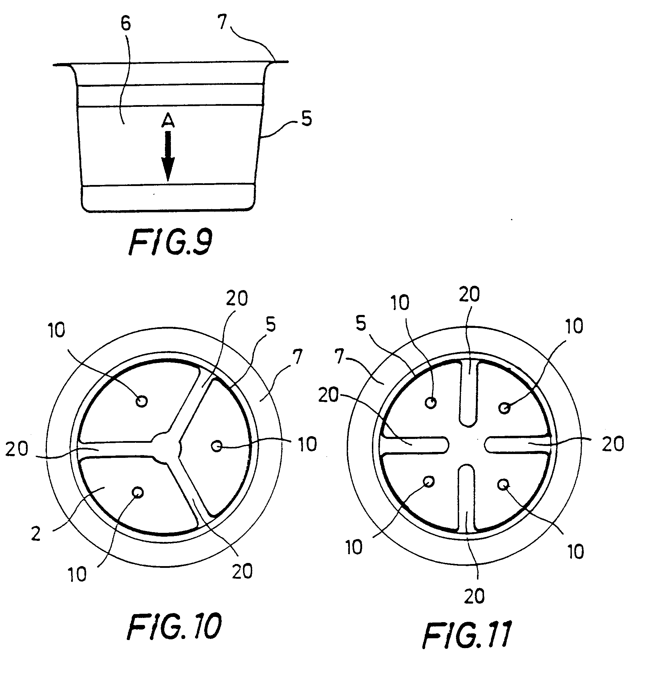

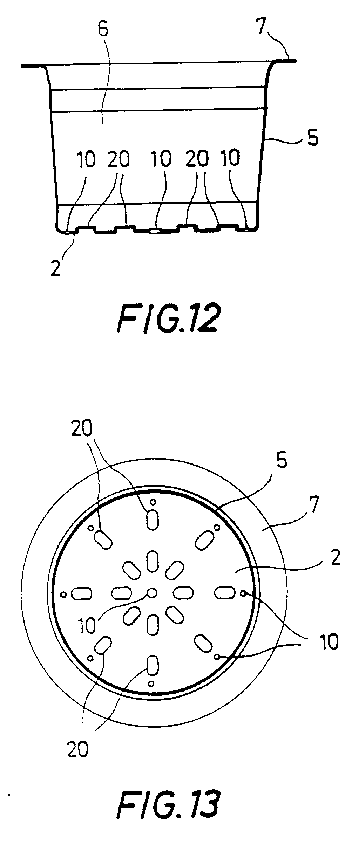

Gemäß der Ausführungsform in Figur 9 umfaßt der Dauerfiltereinsatz einen Metalltopf entsprechend mit Metallwandung 5 und Metallochblendenscheibe 2, die als Bodenplatte des Topfes ausgebildet ist. Die Lochblendenscheibe 2 weist Filteröffnungen auf. Anhand der Figuren 9 und 10 ist zu erkennen, daß die Lochblendenscheibe 2 entsprechend Einprägungen (siehe auch Figuren 11 und 12) aufweist, so daß Stege oder Noppen 20 gebildet werden, auf denen die Filterscheiben 1, 2 aufliegt.

Es versteht sich von selbst, daß die oben beschriebenen Ausführungsformen zahllose Kombinationen untereinander zulassen, so läßt sich z.B. zu jeder Metallausführung auch eine entsprechende Kunststoffausführung des Dauerfiltereinsatzes realisieren.

## Patentansprüche

1. Espresso-Dauerfiltereinsatz zum Einsatz in einer Espressomaschine, mit einer im wesentlichen ebenen Filterscheibe (1), die von mehreren Filteröffnungen (9) im wesentlichen in Strömungsrichtung (A) des zu filternden Mediums durchbrochen ist,
**dadurch gekennzeichnet,**
daß nachfolgend der Filterscheibe (1) in Strömungsrichtung (A) eine Verwirbelungskanten bereitstellende Lochblendenscheibe (2) im Abstand zur Filterscheibe (1) angeordnet ist, wodurch das zu filternde Medium verstärkt verwirbelt bzw. umgelenkt wird.

2. Espresso-Dauerfiltereinsatz nach Anspruch 1, **dadurch gekennzeichnet,** daß die Filteröffnungen (9, 10) der beiden Scheiben (1, 2) zueinander versetzt angeordnet sind.

3. Espresso-Dauerfiltereinsatz nach Anspruch 1 oder 2, **dadurch gekennzeichnet,** daß sich zumindest die Filteröffnungen (10) der Lochblendenscheibe (2) diffusorförmig erweitern.

4. Espresso-Dauerfiltereinsatz nach einem der Ansprüche 1 bis 3,
**dadurch gekennzeichnet,**
daß die beiden Scheiben (1, 2) im Abstand von 0,05 mm bis 4,0 mm, voneinander angeordnet sind.

5. Espresso-Dauerfiltereinsatz nach einem der Ansprüche 1 bis 4, **dadurch gekennzeichnet**, daß die Filteröffnungen (9, 10) in zumindest eine der Scheiben (1, 2) einen polygonförmigen Querschnitt aufweist.

6. Espresso-Dauerfiltereinsatz nach einem der Ansprüche 1 bis 5, **dadurch gekennzeichnet**, daß die Lochblendenscheibe (2) zum Abstützen der Filterscheibe (1) auf ihrer Oberseite Stege bzw. Noppen (20) aufweist.

7. Espresso-Dauerfiltereinsatz nach einem der Ansprüche 1 bis 6, **dadurch gekennzeichnet**, daß die Filterscheibe (1) in einen Metalltopf eingesetzt ist, dessen Bodenplatte (2) als Lochblendenscheibe (2) ausgebildet ist.

8. Espresso-Dauerfiltereinsatz nach einem der Ansprüche 1 bis 7, **dadurch gekennzeichnet**, daß die Lochblendenscheibe aus Kunststoff besteht.

9. Espresso-Dauerfiltereinsatz nach einem der Ansprüche 1 bis 8, **dadurch gekennzeichnet**, daß die Scheiben (1, 2) in einem Kunststoffrahmen (3) gehaltertsind, der angespritzt ist.

10. Espresso-Dauerfiltereinsatz nach Anspruch 9, **dadurch gekennzeichnet**, daß in den äußeren Umfangsbereich des Rahmens (3) ein umlaufender Kragen (4) einer Metalltopfwandung (5) eingreift und somit ein Kaffeeaufnahmebereich (6) im Innern der Wandung (5) gebildet ist.

11. Espresso-Dauerfiltereinsatz nach Anspruch 10, **dadurch gekennzeichnet**, daß zumindest eine der Scheiben (1, 2) mit ihrem Randbereich auf dem umlaufenden Kragen (4) abstützend aufliegt.

12. Espresso-Dauerfiltereinsatz nach Anspruch 9, **dadurch gekennzeichnet**, daß der Rahmen (3) aus Kunststoff besteht und gleichzeitig als Topfwandung (14) zum Bilden eines Kaffeeaufnahmebereichs (6) ausgestaltet ist.

13. Espresso-Dauerfiltereinsatz nach Anspruch 9,
**dadurch gekennzeichnet,**
daß der Rahmen (3) aus Kunststoff besteht und einen nach oben und außen weisenden umlaufenden Kragen (14) aus Metall aufweist, der sich zumindest im oberen Rand als rohrförmiger, den oberen Bereich der Topfwandung (14) bildenden Metallring (27) fortsetzt.

14. Espresso-Dauerfiltereinsatz nach Anspruch 13, **dadurch gekennzeichnet**, daß der Metallring (27) durch den Spritzgußvorgang des Rahmens (3) an den Scheiben (1, 2) befestigt ist.

## Claims

1. Permanent espresso filter insert for insertion into an espresso machine, comprising a substantially flat filter disc (1) which is penetrated by a plurality of filter openings (9) substantially in flow direction (A) of a medium to be filtered, **characterised in that** a perforated disc (2) is arranged spaced apart downstream of said filter disc (1) in flow direction (A) which provides swirl inducing edges by means of which the medium to be filtered is swirled and deflected to an increased extent.

2. The permanent espresso filter insert according to claim 1, **characterised in that** said filter openings (9, 10) of said two discs (1, 2) are offset relative to one another.

3. The permanent espresso filter insert according to claim 1 or 2, **characterised in that** at least the filter openings (10) of said perforated disc (2) are enlarged in the form of diffusors.

4. The permanent espresso filter insert according to any of claims 1 to 3, **characterised in that** said two discs (1, 2) are arranged at a distance of 0.05 mm to 4.0 mm from one another.

5. The permanent espresso filter insert according to any of claims 1 to 4, **characterised in that** said filter openings (9, 19) have a polygonal cross-section in at least one of said discs (1, 2).

6. The permanent espresso filter insert according to any of claims 1 to 5, **characterised in that** said perforated disc (2) comprises webs or knobs (20) on its upper side for supporting said filter disc (1).

7. The permanent espresso filter insert according to any of claims 1 to 6, **characterised in that** said filter disc (1) is inserted in a metal pot whose bottom plate (2) is formed as a perforated disc (2).

8. The permanent espresso filter insert according to any of claims 1 to 7, **characterised in that** said perforated disc is made of plastics.

9. The permanent espresso filter insert according to any of claims 1 to 8, **characterised in that** said discs (1, 2) are held in a plastic frame (3) which is injection-molded thereonto.

10. The permanent espresso filter insert according to claim 9, **characterised in that** a surrounding collar (4) of a metal pot wall (5) engages into the outer circumferential portion of said frame (3) and that a coffee receiving portion (6) is thereby formed in the interior of said wall (5).

11. The permanent espresso filter insert according to claim 10, **characterised in that** at least one of said discs (1, 2) supportingly rests with its edge portion on said surrounding collar (4).

12. The permanent espresso filter insert according to claim 9, **characterised in that** said frame (3) is made of plastics and is simultaneously designed as a pot wall (14) for forming a coffee receiving portion (6).

13. The permanent espresso filter insert according to claim 9, **characterised in that** said frame is made of plastics and comprises an upwardly and outwardly oriented surrounding collar (14) of metal which is continued at least in the upper edge as a tubular metal ring (27) which forms the upper portion of said pot wall (14).

14. The permanent espresso filter insert according to claim 13, **characterised in that** said metal ring (27) is secured to said discs (1, 2) in the injection-molding process of said frame (3).

## Revendications

1. Filtre réutilisable pour café express destiné à être utilisé dans une machine à café, comprenant un disque filtrant (1) essentiellement plane qui est percé de plusieurs ouvertures de filtrage (9) essentiellement dans la direction d'écoulement (A) du milieu à filtrer, caractérisé en ce que, à la suite du disque filtrant (1), dans la direction d'écoulement (A), un disque perforé (2) pourvu d'arêtes de tourbillonnement est situé à distance du disque filtrant (1), grâce à quoi le milieu à filtrer est soumis à un tourbillonnement plus fort resp. une déviation plus importante.

2. Filtre réutilisable pour café express selon la revendication 1, caractérisé en ce que les ouvertures de filtrage (9, 10) des deux disques (1, 2) sont disposées de manière à être décalées les unes par rapport aux autres.

3. Filtre réutilisable pour café express selon la revendication 1 ou 2, caractérisé en ce qu'au moins les ouvertures de filtrage (10) du disque perforé (2) s'élargissent en forme de diffuseur.

4. Filtre réutilisable pour café express selon l'une des revendications 1 à 3, caractérisé en ce que les deux disques (1, 2) sont situés à une distance de 0,05 mm à 4,0 mm l'un par rapport à l'autre.

5. Filtre réutilisable pour café express selon l'une des revendications 1 à 4, caractérisé en ce que les ouvertures de filtrage (9, 10) ont, dans au moins un des disques (1, 2), une section transversale polygonale.

6. Filtre réutilisable pour café express selon l'une des revendications 1 à 5, caractérisé en ce que le disque perforé (2) est pourvu, sur sa face supérieure, de nervures resp. de saillies (20) pour supporter le disque filtrant (1).

7. Filtre réutilisable pour café express selon l'une des revendications 1 à 6, caractérisé en ce que le disque filtrant (1) est placé dans un pot métallique dont la plaque de fond (2) est exécutée en tant que disque perforé (2).

8. Filtre réutilisable pour café express selon l'une des revendications 1 à 7, caractérisé en ce que le disque perforé est formé de matière plastique.

9. Filtre réutilisable pour café express selon l'une des revendications 1 à 8, caractérisé en ce que les disques (1, 2) sont maintenus dans un châssis en matière plastique (3) qui est moulé par injection.

10. Filtre réutilisable pour café express selon la revendication 9, caractérisé en ce qu'un rebord (4) périphérique d'une paroi métallique (5) du pot est emboîté dans la zone de la circonférence externe du châssis (3) et que, de cette manière, une zone réceptacle (6) pour le café est formée à l'intérieur de la paroi (5).

11. Filtre réutilisable pour café express selon la revendication 10, caractérisé en ce qu'au moins un des disques (1, 2) est appuyé, avec sa zone de bordure, sur le rebord (4) périphérique.

12. Filtre réutilisable pour café express selon la revendication 9, caractérisé en ce que le châssis (3) est formé de matière plastique et est exécuté, en même temps, en tant que paroi (14) du pot pour former une zone réceptacle (6) pour le café.

13. Filtre réutilisable pour café express selon la revendication 9, caractérisé en ce que le châssis (3) est formé de matière plastique et est pourvu d'un rebord (14) périphérique en métal dirigé vers le haut et vers l'extérieur qui se poursuit, au moins dans le bord supérieur, sous forme de bague métallique (27) tubulaire formant la partie supérieure de la paroi (14) du pot.

14. Filtre réutilisable pour café express selon la revendication 13, caractérisé en ce que la bague métallique (27) est fixée grâce à l'opération de moulage par injection du châssis (3) sur les disques (1, 2).
